# EUROPÄISCHE PATENTSCHRIFT

(11) **EP 1 965 181 B1**
(45) Veröffentlichungstag und Bekanntmachung des Hinweises auf die Patenterteilung: **13.03.2013**
(21) Anmeldenummer: 08000765.1
(22) Anmeldetag: 16.01.2008
(51) Int. Cl.: G01F 23/284

(54) **Nach dem Radar-Prinzip arbeitendes Füllstandsmessgerät**
Filling level measuring device operating according to the radar principle
Appareil de mesure du niveau de remplissage fonctionnant selon le principe de radar

(30) Priorität: 01.03.2007 DE 102007010468
(43) Veröffentlichungstag der Anmeldung: 03.09.2008
(73) Patentinhaber: KROHNE MESSTECHNIK GMBH & CO. KG, 47058 Duisburg (DE)
(72) Erfinder: Gerding, Michael, 44623 Herne (DE)
(74) Vertreter: Gesthuysen Patent- und Rechtsanwälte

(56) Entgegenhaltungen:
- EP-A- 0 875 738
- WO-A-2004/048898

## Beschreibung

Die Erfindung betrifft ein nach dem Radar-Prinzip arbeitendes Füllstandsmessgerät, das zum Messen des Füllstands eines in einem Behälter befindlichen Mediums dient sowie eine Signalsendeeinrichtung zum Aussenden eines elektromagnetischen Signals, eine elektrische Leiteranordnung zum Führen des elektromagnetischen Signals in den Behälter hinein und zum Zurürkführen reflektierter Anteile des elektromagnetischen Signals aus dem Behälter heraus und eine Signalempfangseinrichtung zum Empfangen der reflektierten Anteile des elektromagnetischen Signals aufweist, wobei die elektrische Leiteranordnung an ihrem oberen Ende mittels einer Aufhängung an einer Einrichtung des Behälters befestigt ist. Solche Füllstandsmessgeräte sind zum Beispiel aus der WO 2004/048.898 A1 und aus der EP 0 875 738 A1 bekannt.

Das Messverfahren eines Füllstandsmessgeräts, das nach dem Radar-Prinzip arbeitet und bei dem eine elektrische Leiteranordnung zum Führen eines elektromagnetischen Signals in den Behälter und zurück vorgesehen ist, basiert auf dem TDR-Messprinzip (Time Domain Reflectometry), das z. B. aus dem Bereich der Kabelprilfung bekannt ist und Ähnlichkeiten mit der Funktionsweise von herkömmlichen Radar-Geräten aufweist. Bei einem derartigen TDR-Füllstandsmessgerät wird z. B. ein extrem kurzer elektrischer Impuls über eine im wesentlichen gerade verlaufende elektrische Leiteranordnung in einen Behälter ausgesandt, in dem sich ein Medium, wie eine Flüssigkeit, ein Pulver oder ein Granulat befindet, dessen Füllstandshöhe bestimmt werden soll. Dabei ist typischerweise eine derartige elektrische Leiteranordnung vorgesehen, die in das Medium hineinreicht und als Einfachleiter oder als Doppelleiter ausgeführt ist.

Der in eine entsprechende elektrische Leiteranordnung eingekoppelte Impuls läuft, von der Leiteranordnung "geführt", in den Behälter hinein und wird dann an der Oberfläche des Mediums wenigstens teilweise reflektiert, wobei der reflektierte Anteil des kurzen elektrischen Impulses von der Signalempfangseinrichtung empfangen wird, um die Laufzeit und damit die Füllstandshöhe des Mediums im Behälter zu bestimmen. Der reflektierte Anteil des kurzen elektrischen Impulses hängt von der Dielektrizitätszahl des Mediums ab und steigt mit dieser. Dabei ist die Laufzeit des Signals proportional zur Füllstandshöhe des in dem Behälter befindlichen Mediums. Sich verändernde Umgebungsbedingungen, wie ein steigender oder ein fallender Umgebungsdruck oder eine steigende oder eine fallende Temperatur, beeinträchtigen die Meßgenauigkeit des TDR-Füllstandsmessgeräts nicht. Außerdem ist die Laufzeit des Signals unabhängig von der Dielektrizitätskonstanten des Mediums, dessen Füllstand gemessen werden soll.

Mitunter werden TDR-Füllstandsmessgeräte für die Messung des Füllstands von Flüssigkeiten bei großen Entfernungen und bei Schüttgutapplikationen eingesetzt. Speziell bei Schüttgutapplikationen kann es z. B. durch Anhaftung des Mediums an der Leiteranordnung oder durch prozessbedingte Bewegungen innerhalb des Behälters zu erheblichen mechanischen Zugkräften kommen, die auf die Leiteranordnung und damit auch auf deren Aufhängung wirken. Dies kann zu einer Beschädigung der Leiteranordnung und der Aufhängung führten. Diese Problematik ist in den eingangs angeführten vorveröffentlichten Druckschriften, der WO 2004/048.898 A1 und der EP 0 875 738 A1, nicht angesprochen.

Damit ist es die Aufgabe der Erfindung, ein derartiges nach dem Radar-Prinzip arbeitendes Füllstandsmessgerät anzugeben, bei dem Beschädigungen der Leiteranordnung und ihrer Aufhängung auf einfache Weise vermieden werden können.

In Weiterentwicklung des eingangs beschriebenen Füllstandsmessgeräts ist diese Aufgabe dadurch gelöst, dass zwischen der Aufhängung und wenigstens einem Teil der elektrischen Leiteranordnung eine Zugkrafiprüfeinrichtung vorhanden ist, die für das elektromagnetische Signal eine Störstelle aufweist, wobei der Abstand der Störstelle von der Signalsendeeinrichtung oder von der Signalempfangseinrichtung von der auf die Leiteranordnung einwirkenden Zugkraft abhängt.

Erfindungsgemäß ist damit vorgesehen, das eigentliche TDR-Messprinzip, nämlich die Reflexion des elektromagnetischen Signals an einer Störstelle und die damit verbundene Laufzeit des Signals zu erfassen, um die auf die Leiteranordnung einwirkende Zugkraft zu überprüfen. Dazu ist die Zugkraftprüfeinrichtung derart ausgestaltet, daß die an ihr vorgesehene Störstelle in Abhängigkeit von der auf die Leiteranordnung einwirkende Zugkraft hoch- bzw. herunterbewegt wird.

Grundsätzlich könnte die Leiteranordnung mehrteilig ausgestaltet sein, so daß sich an die Aufhängung direkt wenigstens ein erster Teil der Leiteranordnung anschließt und erst zwischen diesem ersten oder einem weiteren Teil der Leiteranordnung und einem darunter vorgesehenen Teil der Leiteranordnung die Zugkraftprüfeinrichtung vorgesehen ist. Die Zugkraftprüfeinrichtung kann jedoch nur die Zugkräfte erfassen, die auf die Leiteranordnung wirken, die sich von ihr ausgesehen unterhalb befinden. Daher ist es gemäß einer bevorzugten Weiterbildung der Erfindung vorgesehen, daß die Zugkraftprüfeinrichtung am oberen Ende der gesamten elektrischen Leiteranordnung vorgesehen ist.

Grundsätzlich ist die Erfindung auch für eine Doppelleiteranordnung einsetzbar. Gemäß einer bevorzugten Weiterbildung der Erfindung ist jedoch vorgesehen, daß als elektrische Leiteranordnung eine Einzelleiteranordnung verwendet wird. Insbesondere ist gemäß einer bevorzugten Weiterbildung der Erfindung vorgesehen, daß als Einzelleiteranordnung ein Monoseil verwendet wird. Monoseile sind nämlich insbesondere bei großen Entfernungen und bei Schüttgutapplikationen einfach und verläßlich einsetzbar.

Gemäß einer weiteren bevorzugten Weiterbildung der Erfindung ist vorgesehen, daß die Zugkraftprüfeinrichtung eine Federeinrichtung aufweist, deren Ausdehnung abhängig von der auf sie einwirkenden Zugkraft ist. Dabei ist es nicht zwingend erforderlich, daß die Ausdehnung der Federeinrichtung linear zur Zugkraft verläuft. Über eine Kalibrierung der Zugkraftprüfeinrichtung kann auch bei einem nichtlinearen Verlauf über die Bewegung der Störstelle auf die Zugkraft geschlossen werden. Gemäß einer bevorzugten Weiterbildung der Erfindung ist jedoch vorgesehen, daß die Ausdehnung der Federeinrichtung proportional zu der auf sie einwirkenden Zugkraft ist. Auf diese Weise ist nämlich keine spezielle Kalibrierung erforderlich, so daß der Einsatz einer entsprechenden Zugkraftprüfeinrichtung sehr einfach ist.

Grundsätzlich sind als Federeinrichtung eine Vielzahl von Einrichtungen denkbar, unter anderem z: B. entsprechend starke Gummibänder. Gemäß einer bevorzugten Weiterbildung der Erfindung ist jedoch vorgesehen, daß die Federeinrichtung eine Feder, vorzugsweise eine Spiralfeder, aufweist, mittels derer die Leiteranordnung an der Aufhängung befestigt ist. Eine Feder hat nämlich den Vorteil, daß sie, zumindest in ihrem elastischen Bereich; eine zuvor schon angesprochene proportionale Auslenkung in Abhängigkeit von der auf sie einwirkenden Kraft aufweist.

Eine besonders bevorzugte Ausgestaltung der Zugkraftprüfeinrichtung besteht nun darin, daß die Spiralfeder innerhalb einer Hülse angeordnet ist. Ist diese Hülse gemäß einer weiteren bevorzugten Weiterbildung der Erfindung an der Leiteranordnung derart befestigt, daß in Abhängigkeit von der auf die Leiteranordnung einwirkenden Zugkraft ein unterschiedlich langer Abschnitt der Aufhängung von der Hülse umgriffen wird, so ergibt sich aufgrund des Übergangs von der Aufhängung auf die sie umgreifenden Hülse eine Störstelle für das elektromagnetische Signal, das zu einer gut detektierbaren Rückreflexion führt. Je größer die Zugkräfte auf die Leiteranordnung sind, um so weiter unten befindet sich die durch das Ende der Hülse definierte Störstelle, so daß sich eine entsprechend längere Laufzeit ergibt.

In diesem Zusammenhang sei angemerkt, daß die zuvor beschriebene Ausgestaltung zwar eine derartige ist, bei der bei zunehmender Zugkraft der Abstand der Störstelle von der Signalsendeeinrichtung bzw. von der Signalempfangseinrichtung immer größer wird. Dies ist jedoch erfindungsgemäß nicht zwingend erforderlich. So kann die Zugkraftprüfeinrichtung nämlich auch derart ausgestaltet sein, daß über eine Umlenkungseinrichtung die Störstelle immer weiter an die Signalsendeeinrichtung bzw. an die Signalempfangseiririchtung heranrückt, je größer die auf die Leiteranordnung wirkenden Zugkräfte werden.

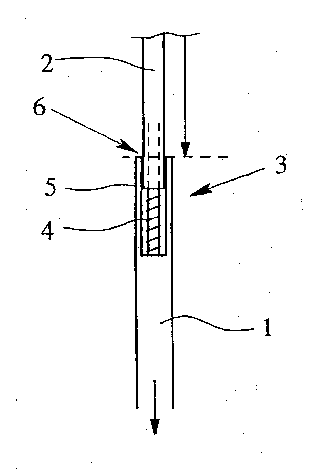

Nachfolgend wird die Erfindung unter Bezugnahme auf die Zeichnung im einzelnen erläutert Die einzige Figur der Zeichnung zeigt schematisch im Schnitt den Übergang von der Aufhängung auf die Leiteranordnung bei einem nach dem Radar-Prinzip arbeitenden Füllstandsmeßgerät gemäß einem bevorzugten Ausführungsbeispiel der Erfindung.

Das in der einzigen Figur dargestellte Füllstandsmeßgerät gemäß dem bevorzugten Ausführungsbeispiel der Erfindung ist dort nur mit seinen erfindungswesentlichen Teilen gezeigt, nämlich mit seiner Leiteranordnung 1 in Form eines Monoseils, der Aufhängung 2 zur Befestigung der Leiteranordnung 1 an einem nicht weiter dargestellten Deckelflansch und einer Zugkraftprüfeinrichtung 3. Die Zugkraftprüfeinrichtung 3 weist eine Spiralfeder 4 auf, mittels derer die Leiteranordnung 1 an der Aufhängung 2 befestigt ist. Ferner ist eine an der Leiteranordnung 1 befestigte Hülse 5 vorgesehen, innerhalb derer die Spiralfeder 4 angeordnet ist und die den unteren Endabschnitt der Aufhängung 2 umgreift.

In Abhängigkeit von der auf die Leiteranordnung 1 wirkenden Zugkraft, mit einem Pfeil dargestellt, dehnt sich die Spiralfeder 4, so daß sich die Leiteranordnung 1 zusammen mit der an ihrem oberen Ende angebrachten Hülse 5 nach unten bewegt. Dies führt dazu, daß, wie ebenfalls mit einem Pfeil dargestellt, der obere Rand 6 der Hülse 5 ebenfalls nach unten bewegt wird und damit einen kürzeren Abschnitt der Aufhängung 2 umgreift.

Im Ergebnis führt dies dazu, daß sich die durch den Rand 6 der Hülse 5 definierte Störstelle für das elektromagnetische Signal weiter nach unten und damit weiter weg von der Signalsendeeinrichtung und der Signalempfangseinrichtung bewegt. Damit kann über eine Laufzeitänderung des im Bereich des Randes 6 der Hülse 5 reflektierten Anteils des elektromagnetischen Signals auf die Zugkraft auf die Leiteranordnung 1 geschlossen werden. Durch das Vorsehen eines Schwellwerts, ab dem ein Alarmsignal ausgegeben wird, kann damit eine Beschädigung der Leiteranordnung 1 und der Aufhängung 2 vermieden werden.

## Patentansprüche

1. Nach dem Radar-Prinzip arbeitendes Füllstandsmessgerät, das zum Messen des Füllstands eines in einem Behälter befindlichen Mediums dient sowie eine Signalsendeeinrichtung zum Aussenden eines elektromagnetischen Signals, eine elektrische Leiteranordnung (1) zum Führen des elektromagnetischen Signals in den Behälter hinein und zum Zurückführen reflektierter Anteile des elektromagnetischen Signals aus dem Behälter heraus und eine Signalempfangsrichtung zum Empfangen der reflektierten Anteile des elektromagnetischen Signals aufweist, wobei die elektrische Leiteranordnung (1) an ihrem oberen Ende mittels einer Aufhängung (2) an einer Einrichtung des Behälters befestigt ist, **dadurch gekennzeichnet, dass** zwischen der Aufhängung (2) und wenigstens einem Teil der elektrischen Leiteranordnung (1) eine Zugkraftprüfeinrichtung (3) vorhanden ist, die für das elektromagnetische Signal eine Störstelle aufweist, wobei der Abstand der Störstehe von der Signalsendeeinrichtung oder von der Signalempfangseinrichtung von der auf die Leitetanordnung (1) einwirkenden Zugkraft abhängt.

2. Füllstandsmeßgerät nach Anspruch 1, dadurch gekerinzeichnet, daß die Zugkraftprüfeinrichtung (3) am oberen Ende der elektrischen Leiteranordnung (1) vorgesehen ist.

3. Füllstandsmeßgerät nach Anspruch 1 oder 2, dadurch gekenntzeichnet, daß als elektrische Leiteranordnung (1) eine Einzelleiteranordnüng vorgesehen ist.

4. Füllstandsmeßgerät nach Anspruch 3, **dadurch gekennzeichnet, daß** als Einzelleiteranordnung ein Monoseil vorgesehen ist.

5. Füllstandsmeßgerät nach einem der Ansprüche 1 bis 4, **dadurch gekennzeichnet, daß** die Zugkraftprüfeinrichtung (3) eine Federeinrichtung aufweist, deren Ausdehnung abhängig von der auf sei einwirkenden Zugkraft ist.

6. Füllstandsmeßgerät nach Anspruch 5, **dadurch gekennzeichnet, daß** die Ausdehnung der Federeinrichtung proportional zu der auf sie einwirkenden Zugkraft ist.

7. Füllstandsmeßgerät nach Anspruch 6, **dadurch gekennzeichnet, daß** die Federeinrichtung eine Feder, vorzugsweise eine Spiralfeder (4), aufweist, mittels derer die Leiteranordnung (1) an der Aufhängung (2) befestigt ist.

8. Füllstandsmeßgerät nach Anspruch 7, **dadurch gekennzeichnet, daß** als Feder eine innerhalb einer Hülse (5) angeordnete Spiralfeder (4) vorgesehen ist.

9. Füllstandsmeßgerät nach Anspruch 8, **dadurch gekennzeichnet, daß** die Hülse (6) an der Leiteränordnung (1) befestigt ist und in Abhängigkeit von der auf die Leiteranordnung (1) einwirkenden Zugkraft einen unterschiedlich langen Abschnitt der Aufhängung (1) umgreift.

## Claims

1. Fill level measuring device operating according to the radar principle, which is used for measuring the fill level of a medium located in a container as well as a signal transmitting means for transmitting an electromagnetic signal, an electric conductor arrangement (1) for guiding the electromagnetic signal into the container and for returning reflected parts of the electromagnetic signal from the container and a signal receiving means for receiving the reflected parts of the electromagnetic signal, wherein the electrical conductor arrangement (1) is attached to a device of the container at its upper end by means of a suspension (2), **characterized in that** a tensile load-testing device (3) is present between the suspension (2) and at least one part of the electric conductor arrangement (1), which has a interference point for the electromagnetic signal, wherein the distance of the interference point from the signal transmission device or from the signal receiving means is dependent on the tensile force bearing on the conductor arrangement (1).

2. Fill level measuring device according to claim 1, **characterized in that** the tensile load-testing device (3) is provided at the upper end of the electrical conductor arrangement (1).

3. Fill level measuring device according to claim 1 or 2, **characterized in that** a single conductor arrangement is provided as electrical conductor arrangement (1).

4. Fill level measuring device according to claim 3, **characterized in that** a mono cable is provided as single conductor arrangement.

5. Fill level measuring device according to any one of claims 1 to 4, **characterized in that** the tensile load-testing device (3) has a spring device, the extension thereof being dependent on the tensile force bearing on it.

6. Fill level measuring device according to claim 5, **characterized in that** the extension of the spring device is proportional to the tensile force bearing on it.

7. Fill level measuring device according to claim 6, **characterized in that** the spring device has a spring, preferably a coil spring (4), by means of which the conductor arrangement (1) is attached to the suspension (2).

8. Fill level measuring device according to claim 7, **characterized in that** a coil spring (4) within a sleeve (5) is provided as spring.

9. Fill level measuring device according to claim 8, **characterized in that** the sleeve (6) is attached to the conductor arrangement (1) and surrounds a differently long section of the suspension (1) depending on the tensile load bearing on the conductor arrangement (1).

## Revendications

1. Appareil de mesure de niveau de remplissage fonctionnant selon le principe du radar, destiné à mesurer le niveau de remplissage d'un milieu se trouvant dans un réservoir, et comprenant un dispositif d'émission de signal destiné à émettre un signal électromagnétique, un moyen à conducteurs électriques (1) destiné à introduire le signal électromagnétique dans le réservoir et à renvoyer des parties réfléchies du signal électromagnétique à l'extérieur du réservoir et un dispositif de réception de signal destiné à recevoir les parties réfléchies du signal électromagnétique, dans lequel le moyen à conducteurs électriques (1) est fixé par son extrémité supérieure au moyen d'une suspension (2) à un moyen de fixation du réservoir, **caractérisé en ce que**, entre la suspension (2) et au moins une partie du moyen à conducteurs électriques (1), se trouve un dispositif d'essai de traction (3) qui présente un défaut pour le signal électromagnétique, dans lequel la distance du défaut au dispositif d'émission de signal ou au dispositif de réception de signal dépend de la force de traction agissant sur le moyen à conducteurs (1).

2. Appareil de mesure de niveau de remplissage selon la revendication 1, **caractérisé en ce que** le dispositif d'essai de force de traction (3) est prévu à l'extrémité supérieure du moyen à conducteurs électriques (1).

3. Appareil de mesure de niveau de remplissage selon la revendication 1 ou 2, **caractérisé en ce qu'**il est prévu en tant que moyen à conducteurs électriques (1) un moyen à un seul conducteur.

4. Appareil de mesure de niveau de remplissage selon la revendication 3, **caractérisé en ce qu'**il est prévu en tant que moyen à un seul conducteur un câble monoconducteur.

5. Appareil de mesure de niveau de remplissage selon l'une quelconque des revendications 1 à 4, **caractérisé en ce que** le dispositif d'essai de force de traction (3) comprend un dispositif à ressort dont l'allongement dépend de la force de traction agissant sur celui-ci.

6. Appareil de mesure de niveau de remplissage selon la revendication 5, **caractérisé en ce que** l'allongement du dispositif à ressort est proportionnel à la force de traction agissant sur celui-ci.

7. Appareil de mesure de niveau de remplissage selon la revendication 6, **caractérisé en ce que** le dispositif à ressort comprend un ressort, de préférence un ressort à boudin (4) au moyen duquel le moyen à conducteurs (1) est fixé à la suspension (2).

8. Appareil de mesure de niveau de remplissage selon la revendication 7, **caractérisé en ce qu'**il est prévu en tant que ressort un ressort à boudin (4) disposé à l'intérieur d'un manchon (5).

9. Appareil de mesure de niveau de remplissage selon la revendication 8, **caractérisé en ce que** le manchon (6) est fixé au moyen à conducteurs (1) et **en ce qu'**il enveloppe une partie de longueur différente de la suspension (1) en fonction de la force de traction agissant sur le moyen à conducteurs (1).
